Europäisches Patentamt

European Patent Office

Office européen des brevets

(19)

(11) Publication number: **0 177 527**
**B1**

(12)     EUROPEAN PATENT SPECIFICATION

(45) Date of publication of patent specification: **21.06.89**

(21) Application number: **85901452.4**

(22) Date of filing: **20.03.85**

(86) International application number:
**PCT/FI85/00027**

(87) International publication number:
**WO 85/04117 26.09.85 Gazette 85/21**

(51) Int. Cl.⁴: **B 01 J 8/24, B 01 D 53/12,**
**F 24 H 1/28, B 04 C 9/00**

(54) TWO- OR MULTI-COMPONENT REACTOR.

(30) Priority: **20.03.84 FI 841126**

(43) Date of publication of application:
**16.04.86 Bulletin 86/16**

(45) Publication of the grant of the patent:
**21.06.89 Bulletin 89/25**

(84) Designated Contracting States:
**AT DE FR GB SE**

(56) References cited:
**DE-A-1 442 745**
**FR-A-1 325 323**
**US-A-3 698 874**

(73) Proprietor: **A. Ahlström Corporation**
**SF-29600 Noormarkku (FI)**

(72) Inventor: **SARKOMAA, Pertti, Juhani**
**Kuusitie 27**
**SF-53810 Lappeenranta 81 (FI)**

(74) Representative: **Liedl, Gerhard**
**Steinsdorfstrasse 21 - 22**
**D-8000 München 22 (DE)**

Courier Press, Leamington Spa, England.

## Description

The present invention relates to a dynamic fluidized-bed reactor in which solid particles are carried pneumatically through a reactor chamber and which includes a fluidized-bed part, a cyclone particle separator for purifying the gases from the fluidized-bed, and a return pipe connected to the separator chamber of the cyclone for returning separated particle material.

The reactor is used for carrying out chemical or physical two- or multi-component processes. The main components of the reactor are feeder devices for gaseous and/or solid materials, the reactor chamber and the separator for solid or liquid materials.

The main field of application of fluidized-bed reactors has been the production of energy from solid fuels. The burning takes place in a solids-gas suspension, the function of the solid and usually non-reactive material being the stabilizing of the combustion process. Fluidized-bed reactors are divided into two main groups according to their mode of operation:

(1) static reactors, in which there is little carriage of solid particles along with the carrier gas, and

(2) dynamic reactors, in which the solid particles are carried pneumatically through the reactor.

In practical applications use is made of some features that are common to both static and dynamic reactors. Advantages of dynamic fluidized-bed reactors over static reactors include, for example, that of higher cross-sectional area heat-release characteristic and, maybe most important, that of better mixing of gaseous compounds. A drawback of dynamic fluidized-bed reactors is the absolute necessity of a solids separator. In spite of this drawback, there is a growing tendency to use dynamic fluidized-bed reactors in fluidized-bed technology.

In dynamic fluidized-bed reactors a conventional cyclone having a solids return duct provided with a gas lock is used almost exclusively as the solids separator. The function of the gas lock is to prevent the flow of gas out of the reactor along the solids return duct into the cyclone. Such a gas flow would have a detrimental effect on the separating capacity of the cyclone.

The document GB—A—2 104 408 discusses the drawbacks of conventional cyclone separators and mentions the disadvantages of positioning conventional cyclones inside the reactor. A reactor of the type initially mentioned is described, in which the gases flow tangentially through a pipe from the upper part of the reactor chamber to a vertical flow-through cyclone separator and are discharged through a separator discharge pipe passing through the bottom of the separator. The bottom of the cylindrical vortex chamber of the separator is substantially plane and is inclined, preferably towards the reactor. The separator solids flow through the return pipe to the lower part of the reactor chamber. This reactor has an advantageous recirculation system making use of a natural circulation of solid matter and avoids the need of a separate gas lock, but also has some operational and constructional drawbacks, as discussed below.

Solid matter is collected on the bottom of the particle separator in an amount depending upon the loading of the reactor. A gas removing pipe is indispensable for the operation of the separator in order to prevent mixing of the solid matter flowing onto the bottom of the cyclone with the clean gas. For high temperatures the pipe must be made of a ceramic material and is therefore expensive, massive and of problematic construction. Moreover the pipe presents a substantial obstacle to the access of the solid matter, gathered on the bottom of the separator, into the discharge pipe. In practice, the surface of the circulating material in the bottom part of the flow-through cyclone tends to adopt a position and shape depending upon the material and the loading. This position and shape is, as a rule, unfavourable to the flow pattern of the cyclone. In order that a good separating ratio be achieved, a part of the volume of the cyclone is needed between the gas removing pipe and the cyclone chamber exclusively for storage of the gathered solid matter.

The document US—A—3 698 874 describes a system for reducing dust emission to the atmosphere from a static fluidized-bed reactor. The system employs one or more vertical cyclone separators positioned inside the reactor, each separator being provided with a dip-leg extending into the bed for returning separated particles. One of the separators is provided with means for bypassing a small part of the gas stream to a filtering system that reduces dust emission by subjecting part of the gas stream carrying non-separable particles as an underflow stream to a filtering operation while returning separated fines to the fluid bed. Separator systems of this type are of disadvantage when used inside a dynamic fluidized-bed reactor.

The documents DE—A—1 442 745 and FR—A—1 325 323 describe horizontal cyclones that are used by themselves as reactors in which fine solid materials are reacted with gases or liquids in order to bring about an exchange of material and/or heat.

It is the object of the present invention to provide a reactor of the kind mentioned in the preamble of patent claim 1 wherein the reactor is of simplified construction and smaller size, yet permits a stable operation of the cyclone separator.

This object is achieved by the cyclone separator being a horizontal cyclone fitted in the reactor chamber, the return pipe being connected to the circumference of the separator chamber, and the purified gases being removed through one end of the separator chamber.

The multi-component reactor in accordance with the present invention makes it possible to eliminate the problems and drawbacks of fluidized-bed reactors that use conventional vertical flow-through cyclones.

The most important advantages provided by the present invention are the constructional simplifications of the reactor and the operational improvements. Use of a horizontal cyclone makes it possible to avoid the operational and constructional drawbacks resulting from the storage of solid matter in flow-through cyclones. The use of a horizontal cyclone, permitting the reactor to be of simplified construction and smaller size, yields economies of investment. The horizontal separator operates even more stably than a flow-through cyclone, because the removal of the solid matter is made from the circumference of the separator chamber. The location of the solids removing pipe provides an increase in carrying capacity of the discharge pipe, because the solid matter arriving at the discharge pipe has a high velocity (mass flow=cross-sectional area×velocity×density). Owing to their stated properties, horizontal cyclones are particularly well suited for connection in series.

The reactor of the present invention, using a horizontal cyclone, is particularly suitable for being provided with a fully cooled reactor part of a fire-tube boiler, because the shapes of the reactor, the separator and the gas and return pipes are favourable in view of heat expansion.

Examples and embodiments of the invention are described in detail below with reference to the drawings in which

Fig. 1 is a vertical sectional view of a reactor according to the present invention as used for combustion under complete or partial oxygenation;

Fig. 1A is a plan view of the cyclone separator of the reactor shown in Fig. 1;

Fig. 2 is a vertical sectional view of a reactor according to the present invention used as a part of a fire-tube boiler;

Fig. 2A is a plan view of a cross-section along the line A—A of Fig. 2, seen in direction of the arrows;

Fig. 3 is a vertical sectional view of a reactor according to the present invention as used for the cooling, heat recovery and purification of hot gases possibly containing gaseous and/or molten and vaporous and/or solid impurities; and

Fig. 3A is a plan view of a cross-section along the line A—A of Fig. 3, seen in direction of the arrows.

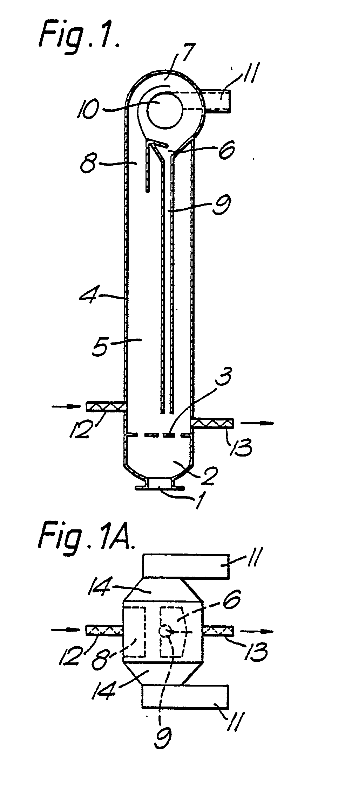

Fig. 1 shows the construction and the mode of operation of a dynamic fluidized-bed reactor based on a horizontal cyclone as applied to combustion or, more generally, to carrying out a desired multi-component process. The process gas is passed into the reactor through the inlet opening 1 of the air chamber 2 placed in the bottom part of the reactor. Via the gas distributor plate 3 placed between the reactor chamber 5 and the air chamber 2, the gas is passed into the bottom part of the reactor chamber 5, into which the solid material separated in the horizontal separator is passed through the return pipe 9. The solid process material is fed into the reactor through the branch 12. The solid process product or waste is removed through the branch 13. The mantle 4 of the reactor chamber 5 may be cooled, and the reactor chamber may also have cooling elements. The gas containing solid matter is passed through the duct 8 tangentially to the circumference of the horizontal separator chamber 7 of the horizontal cyclone placed above the reactor chamber 5. The solid material separated out of the horizontal cyclone onto the wall is removed via a branch 6 placed on the circumference of the separator chamber, from which duct the solid material is passed further along the return pipe 9 to the desired location of the reactor. The gases purified in the horizontal cyclone are removed via both ends of the cyclone through the openings 10. The exhaust gas branches 11 can be connected to the branches 10 tangentially, whereby some of the tangential velocity of the exhaust gas can be recovered.

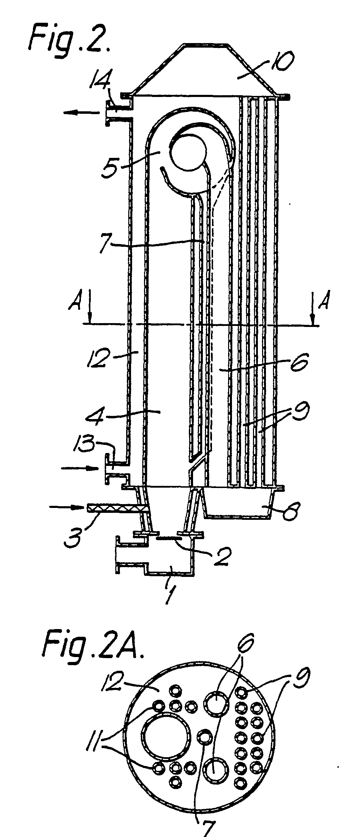

Fig. 2 shows the construction of principle of a fire-tube boiler accomplished by means of a reactor of the sort shown in Fig. 1. The combustion air is passed from the air chamber 1 via the air distribution plate 2 into the combustion chamber 4, into whose bottom part the fuel is fed through the branch 3. The reactor in accordance with the invention, operating in accordance with the principles indicated in the description of Fig. 1, is completely placed in a water space 12 and is, thus, fully cooled. The exhaust gas ducts 6 of the horizontal separator pass the gases purified of solid matter into the lower reversing chamber 8. In the fire tubes 9, the gases are cooled further and pass into the upper reversing chamber 10, and from there further through the pipes 11 into the system of flue gas ducts. The solid material is returned through the pipe 7 to an appropriate level in the combustion chamber 4. The branches 13 and 14 are the inlet and outlet ducts for the cooling water.

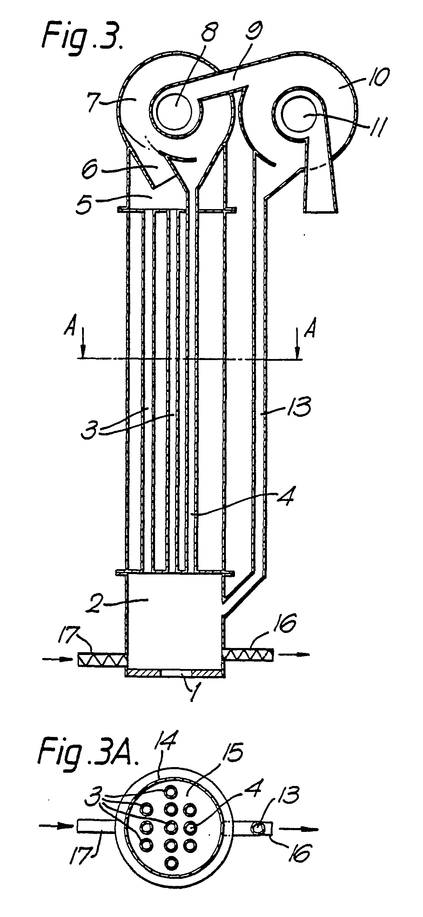

Fig. 3 shows the reactor solution in accordance with the invention as applied to the purification of hot gases and to the recovery of heat, accomplished by means of two flow-through cyclones connected in series. The hot gases to be purified are passed into the reactor through the opening 1. In the bottom part of the reactor space, there is a mixing chamber 2, into which the solid material is returned through the return pipes 4 and 13, and into which the necessary solid process material, if any, is fed (e.g., $CaCO_3$ for the absorption of sulphur oxides) through the branch 17. If necessary, process material or waste (e.g., $CaSO_4$) can be removed out of the mixing space 2 through the branch 16. The solid materials and the gas rise through the pipes 3 into the collecting space 5. Through the branch 6, the gases containing solids are passed tangentially to the circumference 7 of the first horizontal cyclone. The pre-purified gases are removed out of the first separator through one end or both ends of the separator chamber through the openings 8. The separated solid matter is returned into the mixing part 2 through the pipe 4. Through the branch 9, the pre-purified gases are passed to the circumference of the separator chamber 10 of the second horizontal separator. The pure gases are removed through the ends of the second horizontal separator through the openings 11. The separated solid matter is returned through the discharge pipe 13 into the mixing part 2. In order to reduce losses of pressure, the gas ducts 9 and 12 are attached to the discharge openings 8 and 11 tangentially. The cooling of the reactor part in Fig. 3 is accomplished as a fire-tube construction, whereby the tubes 3 and 4 are located in a water space 15 formed by the mantle 14.

From the horizontal separator shown in Fig. 1, the gases are removed symmetrically, and the ends of the separator chamber are conical. It is clear that the ends of the separator chamber may also be plane and that the gas may also be removed from one side only. If necessary, the discharge pipes 10 of the horizontal separator may also extend into the separator chamber 7. In Fig. 1, a practical connection between the reactor chamber and the horizontal separator is shown, but it is clear that the separator may be located, e.g., eccentrically relative the reactor chamber and that the return duct for the solid matter may also be located outside the reactor chamber.

The cooling part of the embodiment shown in Fig. 3 consists of fire tubes placed inside the mantle. It is obvious that the cooling may also be accomplished by means of water tube constructions. It is also evident that, if necessary, even more than two separators may be connected in series and/or in parallel.

Even otherwise, it should be stated that, above, the reactor invention has been described just in the light of three exemplifying embodiments. This is, however, not supposed to confine the field of application of the invention concerned to the given example cases only.

**Claims**

1. A dynamic fluidized-bed reactor in which solid particles are carried pneumatically through a reactor chamber, including a fluidized-bed part, a cyclone particle separator for purifying the gases from the fluidized-bed, and a return pipe connected to the separator chamber of the cyclone for returning separated particle material, characterized in that the cyclone particle separator is a horizontal cyclone fitted in the reactor chamber that the return pipe is connected to the circumference of the separator chamber, and that the purified gases are removed through one end of the separator chamber.

2. A reactor as claimed in claim 1, characterized in that the reactor chamber is provided with a cooler.

3. A reactor as claimed in claim 2, characterized in that the reactor and the horizontal cyclone are completely fitted inside a water mantle.

4. A reactor as claimed in claim 2 or 3, characterized in that the reactor part consists of vertical tubes (3, 4) placed in a water mantle (14), some of said tubes functioning as return pipes (4) for the separated solid matter.

5. A reactor as claimed in any of claims 1 to 4, characterized in that the return pipe is connected to the lowermost point of the circumference of the separator chamber of the cyclone.

6. A reactor as claimed in any of claims 1 to 5, characterized in that the purified gases are removable through both ends of the separator chamber of the cyclone.

7. A reactor as claimed in any of claims 1 to 6, characterized in that there is a first horizontal cyclone operating as a pre-separator of low pressure lossess, and a second horizontal separator, connected in series, operating as a purifier of gases.

**Patentansprüche**

1. Dynamischer Fließbettreaktor, in dem Festteilchen pneumatisch durch eine Reaktorkammer getragen werden, welche einen Fließbetteil, einen Zyklon-Teilchenseparator zum Reinigen der Fließbettgase und ein an die Separatorkammer des Zyklons angeschlossenes Rückführungsrohr zum Rückführen von abgetrenntem Teilchenmaterial aufweist, dadurch gekennzeichnet, daß der Zyklon-Teilchenseparator ein in die Reaktorkammer eingebauter Horizontalzyklon ist, daß das Rückführungsrohr an den Umfang der Separatorkammer angeschlossen ist, und daß die gereinigten Gase durch ein Ende der Separatorkammer abgeführt werden.

2. Reaktor nach Anspruch 1, dadurch gekennzeichnet, daß die Reaktorkammer mit einem Kühler versehen ist.

3. Reaktor nach Anspruch 2, dadurch gekennzeichnet, daß der Reaktor und der Horizontalzyklon völlig innerhalb eines Wassermantels eingebaut sind.

4. Reaktor nach Anspruch 2 oder 3, dadurch gekennzeichnet, daß der Reaktorteil aus vertikalen Rohren (3, 4) besteht, welche in einem Wassermantel (14) angeordnet sind, wobei einige dieser Rohre als Rückführrohre (4) für den abgetrennten Feststoff arbeiten.

5. Reaktor nach einem der Ansprüche 1 bis 4, dadurch gekennzeichnet, daß das Rückführrohr an die tiefste Stelle des Umfanges der Separatorkammer des Zyklons angeschlossen ist.

6. Reaktor nach einem der Ansprüche 1 bis 5, dadurch gekennzeichnet, daß die gereinigten Gase durch beide Enden der Separatorkammer des Zyklons abführbar sind.

7. Reaktor nach einem der Ansprüche 1 bis 6, dadurch gekennzeichnet, daß ein erster Horizontalzyklon, der als Vorseparator mit niedrigem Druckverlust arbeitet, und ein zweiter Horizontalseparator, der als Gasreiniger arbeitet, in Reihe geschaltet sind.

**Revendications**

1. Réacteur à lit fluidisé dynamique dans lequel des particules solides sont transportées pneumatiquement au travers d'une chambre de réacteur, qui comprend une partie à lit fluidisé, un séparateur cyclone pour les particules afin de purifier les gaz provenant du lit fluidisé et une conduite de retour connectée à la chambre du séparateur cyclone pour ramener le matériau en particules séparé, caractérisé en ce que le séparateur cyclone de particules est un cyclone horizontal monté dans la chambre du réacteur, en ce que la conduite de retour est connectée à la circonférence de la chambre du séparateur et en ce que les gaz purifiés sont extraits au travers de l'une des extrémités de la chambre du séparateur.

2. Séparateur selon la revendication 1, caractérisé en ce que la chambre du réacteur est munié d'un système de refroidissement.

3. Réacteur selon la revendication 2, caractérisé en ce que le réacteur et le cyclone horizontal sont totalement placés à l'intérieur d'une chemise d'eau.

4. Réacteur selon la revendication 2 ou 3, caractérisé en ce que la partie réacteur comprend des tubes verticaux (3, 4) placés dans une chemise d'eau (14) certains desdits tubes fonctionnant comme conduites de retour (4) pour les matières solides séparées.

5. Réacteur selon l'une quelconque des revendications 1 à 4, caractérisé en ce que la conduite de retour est reliée au point le plus bas de la circonférence de la chambre du séparateur du cyclone.

6. Réacteur selon l'une quelconque des revendications 1 à 5, caractérisé en ce que les gaz purifiés peuvent être enlevés au travers des deux extrémités de la chambre de séparateur du cyclone.

7. Réacteur selon l'une quelconque des revendications 1 à 6, caractérisé en ce qu'on prévoit un premier cyclone horizontal fonctionnant comme un pré-séparateur des fuites à faible pression et un séparateur horizontal relié en série fonctionnant comme purificateur de gaz.

Fig.1.

Fig.1A.

*Fig.2.*

*Fig.2A.*

Fig.3.

Fig.3A.

3